# EUROPEAN PATENT APPLICATION

(11) **EP 4 841 254 A1**
(43) Date of publication of application: **18.11.2026**
(21) Application number: 25175795.1
(22) Date of filing: 12.05.2025
(51) Int. Cl.: G01N 27/623, H01J 49/00

(54) **METHODS FOR OPERATING TRAPPING ION MOBILITY SPECTROMETERS WITH PARALLEL ACCUMULATION**

(71) Applicant: Bruker Switzerland AG, 8117 Fällanden (CH)
(72) Inventor: The designation of the inventor has not yet been filed
(74) Representative: Bremi, Tobias Hans

(57) **Abstract**

A method for analyzing ions of a selected wide range of mobilities using a TIMS device, comprising the steps of:
(a) collecting said ions in an accumulation unit (11a) over a range of mobilities by way of an axial field gradient increasing from a minimum value (30) at an entrance to a maximum value (31) at the end of the accumulation unit (11a),
and collecting ions in a scan unit (11b) over said full selected wide range of mobilities by way an axial field gradient increasing from a minimum value (32) at an entrance to a maximum value (33) at the end,
(b) transferring ions from the accumulation unit (11a) into the scan unit (11b), wherein in parallel said maximum value (31) of the accumulation unit (11a) and said maximum value (33) of the scan unit (11b) are in parallel successively lowered, thereby separating the ions according to mobility at the exit of the scan unit (11b).

## Description

### TECHNICAL FIELD

The present invention relates to methods for operating trapping ion mobility spectrometers with parallel accumulation e.g. for LC MS/MS experiments, in particular for the analysis of complex mixtures, especially mixtures of compounds of biological origin which e.g. vary widely in abundance. In particular it relates to methods of trapped ion mobility spectrometry with optimized mobility windows, accumulation, and mobility mass analysis.

### PRIOR ART

The motion of molecular ions in gases as compared to their motion in a condensed phase has established ion mobility as a powerful separation tool, especially in conjunction with mass spectrometry. Ion mobility spectrometry (IMS), such as drift tube ion mobility spectrometry (DTIMS), travelling wave ion mobility spectrometry (TWIMS), and differential mobility spectrometry (DMS), also known as field asymmetric ion mobility spectrometry (FAIMS), act as a post-ionization method for gas-phase filtering of ions in a controlled atmosphere, fractionating complex samples, suppressing chemical noise, separating isobaric mixtures, and characterizing molecular ions based on their mobility coefficients. These are methods that separate gas phase ions based on their interaction with a collision gas and their masses. In the first step, the ions are separated according to their mobility through a buffer gas on a millisecond timescale using an ion mobility spectrometer. The separated ions are then introduced into a mass analyzer in a second step where their mass-to-charge ratios can be determined on a microsecond timescale. The effective separation of analytes achieved with this method makes it widely applicable in the analysis of complex samples such as in proteomics and metabolomics.

US 7,838,826 B1 (M. A. Park, 2008) and the corresponding patent family members presents a small ion mobility analyzer/spectrometer which has become known under the acronym "TIMS" analyzer/spectrometer (TIMS = trapped ion mobility spectrometry). The terms ion mobility analyzer and ion mobility spectrometer are used interchangeably here. A TIMS analyzer comprises a gas flow that drives ions against a counter-acting electric field barrier such that the ions are at first trapped along the axis of the TIMS analyzer. The ions are confined in the radial direction by an electric RF field. After transferring ions from an ion source to the electric field barrier, the height of the electric field barrier or the gas velocity is adjusted such that ion species are released from the electric field barrier in the sequence of their mobility.

Commonly, the length of the ion mobility separation unit of a TIMS analyzer amounts to about five centimeters only. In a small tube with an inner diameter of about eight millimeters, a radial RF quadrupole field is generated to hold ions near to the axis. A gas flow inside a tube drives ions entrained in the gas flow against a ramped counter-acting electric DC field barrier where the ions are trapped and separated according to their mobilities at locations on the field ramp at which the friction force of the moving gas equals the counter-acting force of the electric DC field on the ramp. After loading the TIMS with ions, the height of the electric DC field barrier is decreased; this scan releases the ion species in the sequence of their mobility. Unlike many other trials to build small ion mobility spectrometers, the small device by M. A. Park has already achieved, with reduced scan speeds, ion mobility resolutions up to R_{mob} = 400, which is extraordinarily high.

US2012273673 discloses, how Ions with a predetermined range of ion mobilities are produced by filtering input ions with at least two consecutive ion mobility high pass and/or low pass filters. Each ion mobility filter is formed by entraining ions in a moving gas and applying a DC electric field to the ions which causes the ions to move in a direction opposite to the gas flow. An ion mobility high pass filter is formed when the DC electric field drives the ions against the flow of gas, whereas an ion mobility low pass filter is formed when a the gas flow drives entrained ions against an DC electric field barrier.

A TIMS analyzer with parallel ion accumulation is described in US 9,683,964; it improves the utilization of the ions from the ion source to nearly 100%. Importantly, many ions sources, such as electrospray ion sources produce ions continuously. TIMS with parallel accumulation can also be operated to collect and analyze ions continuously - that is, TIMS can operate at 100% duty cycle. Barring pseudopotential or space charge effects, substantially all ions of the ion source are collected and analyzed without loss. TIMS with parallel ion accumulation further provides the unique possibility to prolong the ion accumulation duration to find more detectable ion species, thereby even increasing the ion mobility resolution by a corresponding prolongation of the scan time. In a TIMS analyzer with parallel ion accumulation the ions are collected in an accumulator unit or region, preferably almost identical to the scanning unit, at a ramp of an electric DC field barrier such that they get spatially separated by their ion mobility along the ramp. Therefore, the accumulated ions are less influenced by space charge than in other types of accumulator units. After accumulation, the field barrier in the accumulator unit or region is switched off and the accumulated ions are transferred to the downstream scan unit or region having the same ramp as previously the accumulator unit or region, the ramp is switched on again in the accumulator unit or region for accumulation again, while in parallel the scan unit or region can now mobility scan all the previously accumulated ions. Of greatest importance is the unique feature of a TIMS analyzer that a longer accumulation period permits to increase the mobility resolution by choosing correspondingly longer mobility scan durations, e.g. 100 milliseconds scan duration with an ion mobility resolution of R_{mob} = 75 instead of 20 milliseconds scan duration with R_{mob} = 30. As a consequence of the higher number of ions collected and the better ion mobility resolution, more ion species can be detected and measured. Once an ion mobility scan is completed (optionally after twenty to some hundred milliseconds), again the accumulated ions are transferred (in about a millisecond) from the accumulation unit to the scanning unit, and the next ion mobility scan can be started. In total, a skilled practitioner will appreciate that it will be possible to achieve a measurement rate of 300 to 450 ion species per second. If TIMS with parallel ion accumulation is installed in tandem mass spectrometer (MS/MS instrument) an MS-MS instrument, 300 to 450 characteristic fragment ion spectra per second may be measured quantitatively. US9,304,106 provides a further trapping ion mobility analyzer and methods for operating the ion mobility analyzer. The trapping ion mobility analyzer comprises an RF field for radially confining ions along an axis, a region with an axial electric DC field and a gas flow along the axis counteracting the electric DC field in the region, wherein the region either comprises a rising edge with an increasing axial electric DC field or a falling edge with a decreasing axial electric DC field and wherein the slope of the electric field strength along the axis is not constant at a substantial portion of the edge.

US9,984,864 relates to the operation of trapped ion mobility spectrometers ("TIMS"). The invention proposes to accumulate and to scan the ions of a selected range of mobilities by using a long and flat electric field ramp created by additional voltages. By a voltage supplied at the beginning of the flat ramp, the lowest mobility of the mobility range of ions to be collected can be selected. By the difference of the voltages at the beginning and the end, the width of the mobility range is determined. The spatial zoom advantageously can collect considerable more ions of interest than a temporal zoom without severe losses by space charge effects, and more ions can be detected in the mass-mobility map. WO-A-2019096852 relates to use of an isobaric label in mass spectrometry (MS) analysis using data-independent acquisition (DIA), wherein said isobaric label comprises or consists of a group which fragments in the mass spectrometer (i) at an energy below the energy required for fragmenting analyte-derived precursor ions and/or a higher conversion rate than said precursor ions; and (ii) at said energy according to (i) and when coupled to a precursor ion, at a single site within said group, to yield a first moiety and a second moiety, said second moiety being coupled to said precursor ion. It proposes the use of a trapped ion mobility spectrometry-time of flight (timsTOF) instrument, equipped with parallel/serial fragmentation (PASEF); see, e.g. Meier et al. 2015, doi: 10.1021/acs.jproteome.5b00932. US-A-2019371585 relates to selection of precursors from a measured mobility-mass map for tandem mass spectrometry and is based on processing a peak list from measured signals and clustering these peaks in the mobility-mass space.

US-A-2022034840 discloses an apparatus and a method of data independent combined ion mobility and mass spectroscopy analysis which includes introducing precursor ions into an ion mobility spectrometer (IMS), sequentially releasing precursor ions from said IMS according to their ion mobility, introducing said released precursor ions into a mass filter, fragmenting the precursor ions transmitted through said mass filter to generate fragment ions, and carrying out a mass spectroscopy measurement on said fragment ions. The IMS and mass filter are controlled in a synchronized manner to carry out a plurality of IM scans, wherein adjacent mass windows in said IM scan that are associated with consecutive mass spectroscopy measurements of fragment ions overlap, such that precursor ions transmitted through said mass filter during said IM scan are located in at least one continuous scan region in an m/z-IM plane which extends in a generally diagonal direction in said m/z-IM plane.

Targeted selection of peptides from complex protein digests subjected to fragmentation is a performance-limiting factor in tandem mass spectrometry (MS). The problem is mainly attributed to the large number of co-eluting high abundance peptides and limitations in the duty cycle of the mass spectrometer arranged to operate in data-dependent acquisition (DDA) mode whereby precursor ions are selected sequentially for fragmentation in order of decreasing intensity. Furthermore, the depth of proteomic analyses is also limited by the overwhelming proportion of high abundance background ions that compromise the identification and quantification of low abundance peptides. Whether low-intensity precursors are selected for fragmentation is primarily dictated by the speed at which the mass analyzer can perform tandem MS analysis. The dynamic range of the analysis in DDA mode can be extended by excluding previously analyzed precursor ions, but this strategy is no longer efficient for highly complex samples with an extended dynamic range in concentration. The duty cycle of the MS remains a problem even in data-independent acquisition (DIA) mode where all ions within a selected mass-to-charge range are selected for fragmentation. The issue of sample complexity is routinely addressed by fractionating the sample.

Liquid chromatography coupled to Mass Spectrometry (LC-MS) has now been used for many years in the proteomic community for the identification and quantification of peptides (and thus proteins) from complex sample mixtures. In proteomics, the analytes are typically peptides generated by tryptic digestion of protein samples. The commonly most used approaches are variants of the so-called LC-MS/MS or "shotgun" MS approach that is based on the generation of fragment ions from precursor ions that are automatically selected based on the precursor ion profiles (data dependent analysis, DDA). A main shortcoming of these methods is poor reproducibility which results in only partially overlapping protein sets in repeated analysis of substantially similar samples. Several new approaches have recently been developed that address these limitations and which can conceptually be described as targeted proteomics approaches.

Another variant of measurement is data independent acquisition (DIA). Contrary to MRM or PRM, this approach does not require any preliminary method design prior to the sample injection. Since the LC-MS acquisition covers the complete analyte contents of a sample through the entire mass and retention time (RT) ranges the data can be mined a posteriori for any peptide/precursor of interest. Data is acquired in a data independent manner, on the complete mass range (e.g. 200-2000 Thomson) and through the entire chromatography, disregarding of the content of the sample. This is commonly achieved by stepping the wide selection window of the mass analyzer step by step through the complete mass range. In effect, this data acquisition method generates a complete fragment ion map for all the analytes present in the sample and relates the fragment ion spectra back to the precursor ion selection window in which the fragment ion spectra were acquired. This is achieved by widening the precursor isolation windows on the mass analyzer and thus accounting a priori for multiple precursors co-eluting and concomitantly participating to the fragmentation pattern recorded during the analysis. Such a precursor window is called a precursor selection window. The result is complex fragment ion spectra from multiple precursor fragmentations, that require a more challenging data analysis.

### SUMMARY OF THE INVENTION

TIMS with parallel accumulation and separation is a powerful gas phase separation technique that separates ions via a gas flow and opposing DC axial field according to their mobility. The mobility distribution of ions in the device is set by both the applied voltages (user variable) and the resistor profile (fixed), the current profiles are optimized for the mid mobility range (~0.8 - 1.4 1/K0) as this is the useful range for proteomics applications. Higher mobility species are stored in a smaller axial volume due to the chosen profile and as a result have lower space charge capacity.

Current TIMS devices and their modes of operation have relatively poor performance for high mobility (low m/z) ions when operated in a broad analysis mode as is required e.g. for a metabolomics type application. The proposed implementation of simultaneously scanned TIMS regions enables larger axial trapping volumes for target species across a significantly wider mobility range.

In particular high mobility species have very limited storage volume in the existing TIMS implementation. The proposed method enables a TIMS with parallel accumulation and separation to be used in a wide mobility range application as e.g. metabolomics demands. The proposed implementation enables additional functionality such as mobility dependent declustering (activation) potential, enabling optimal DC settings for both larger, more stable, and smaller, more easily fragmented, ions within the TIMS device.

The conventional TIMS devices with a set resistor profile have a variable charge limit for a given mobility, based on the starting mobility range selected for trapping/analysis. Higher mobility ions are compressed into a smaller axial volume due to the resistor profile used for maximum sensitivity in the mid mobility range (~0.8 - 1.4 1/K0). The proposed new operation method enables a wider analysis range, without the need of an external accumulation device, at the expense of maintaining 100% duty cycle for all mobilities, but the effective duty cycle can be increased, in particular for high mobility ions.

Proposed is a trapped ion mobility spectrometer with fixed electric field gradient profiles capable of accumulation of the entire mobility range to be analyzed in the first and second regions, and capable of partial mobility accumulation in the first region and accumulation of the entire mobility range in the second.

Typically, ions are stratified axially in the device according to their mobility in both the first and second regions of the device.

Preferably ions are stratified axially in the device according to their mobility significantly only in the second regions of the device, i.e. the device has a mostly zero field EFG in the accumulation region followed by a sharp ramp up to the trapping EFG.

The axial storage volume in particular for high mobility ions can be increased, by use of the first region as a partial mobility trapping region, from which ions are released as the DC barrier is scanned down in the second region, and the storage volume for ions trapped in the first region increases.

This can be implemented in that a constant potential difference is applied between the exit of the first region, and the beginning of the second region resulting in a constant activation potential during ion transfer between the two regions.

Also a decreasing acceleration potential difference can be applied between the exit of the first region, and the beginning of the second region as the scan progresses resulting in a mobility dependent activation potential.

Or a decreasing retarding potential difference can be applied between the exit of the first region, and the beginning of the second region as the scan progresses, equal in field magnitude to the DC field at the exit of the first region, effectively forming a plateau increasing the mobility resolution of the accumulation transfer.

A gate can be inserted between the first and second regions, enabling rejection of ions from transmission between the two regions.

Such a gate can be used to reject ions from transmission into the second region, enabling a continuous introduction of ions of any mobility from the ion source, while ensuring ions only appear at their respective mobility positions in the scan and do not transmit through the second region without being trapped that is allowing the low mobility ions in the second region to be analyzed while accumulating additional high mobility ions in the first region while the gate rejects any ions not trapped by the first region.

It is possible to make multiple fills into such a device as the DC trapping field is scanned down, the axial storage volume changes for trapped ions, a successive mobility fill event may be used to take advantage of this increased storage volume.

An upstream device can further be used to bias, but not restrict the transmission of ions to a specific mobility range. Also, an upstream device can be used to restrict the transmission of ions to a specific mobility range to provide mobility selective transmission.

More generally speaking, the present invention relates to a method for analyzing ions of a selected wide range of mobilities using a trapped ion mobility separator comprising an accumulation unit and a scan unit.

The method is comprising the steps (a) and (b) (not excluding further steps, but preferably the process is a repetition of these steps only):
(a) collecting said ions in said accumulation unit over a range of mobilities by way of an axial field gradient increasing from a minimum value, normally at an entrance of the device, to a maximum value, normally at the end of the accumulation unit, wherein said maximum value at the end of the accumulation unit is set so that the low mobility cut-off of this range of mobilities collected in the accumulation unit is higher than the low mobility cut-off of said selected wide range of mobilities;
   and collecting ions in said scan unit over said full selected wide range of mobilities by way an axial field gradient increasing from a minimum value at an entrance to a maximum value at the end of the scan unit (ions of higher mobility that should be trapped in the first region may also not be collected directly in this region, but the scan unit or analyzer is then capable of trapping the full mobility range), or by way of a variable axial gas velocity increasing from a minimum value to a maximum value
(b) transferring ions from the accumulation unit into the scan unit,
   said scan unit collecting ions by way of an axial field gradient increasing from a minimum value, preferably at an entrance to a maximum value, preferably at the end of the scan unit, said maximum value at the end of the scan unit being larger than said maximum value at the end of the accumulation unit,
   wherein in at least one phase of that transfer simultaneously said maximum value at the end of the accumulation unit and said maximum value at the end of the scan unit are successively lowered, thereby separating the ions according to mobility at the exit of the scan unit.

Note that "simultaneously successively lowered" is meaning at the same time, but not necessarily at the same rate or at the same value.

The "selected wide range of mobilities" as used in this specification is defined as the full overall range of ion mobilities to be measured in the method, starting at a low mobility threshold value and carrying over to a high mobility threshold value. Ions outside of that selected wide range of mobilities cannot be analyzed and will not exit the scan unit and/or will be scheduled to exit the scan unit in a way not to arrive at the final detector.

Ions with lower mobility (higher 1/K0) than the range are not trapped in either region. Ions with higher mobility are purged from the accumulation unit (TIMS) after the scan ends. In the first case ions likely do arrive at the final detector, they transmit through the entire instrument and are pulsed into the TOF and detected, but one does not record data during this time. In the second case RFs are disabled in the collision cell prior to the TOF such that residual ions are removed from the system, and ions from the accumulation unit (TIMS) purge are mainly discarded.

If percentages of the "selected wide range of mobilities" are given to define sub ranges and their threshold values, e.g. for defining the range of mobilities collected in the accumulation unit in phase (a), these percentages are given for the case where the mobilities are linearly given in units of 1/K₀ (V·s/cm²). If therefore for example the "selected wide range of mobilities" is 0.2-2.2 V·s/cm² and in the accumulation unit in the accumulation phase (a) 90% of that range, starting at the high mobility threshold value, are collected, this means that ions with a mobility in the range of 0.2-2.0 V·s/cm² are collected while the low mobility ions having a mobility in the range of 2.0-2.2 V·s/cm² are passing through and are only collected in the scan unit.

### Definitions:

One of the key elements of the proposed method is that the method is analyzing the ion mobility over a **selected wide range of mobilities** in a new way. In the accumulation phase (a), contrary to the conventional approach, not that full wide range of mobilities is accumulated in the accumulation unit, or put differently, only a portion of the full mobility range is accumulated in the accumulation unit. One part of the selected wide range of mobilities already in that accumulation phase is transferred or allowed to pass to the scan unit. Namely a fraction of ions with the lowest mobility are not accumulated in the accumulation unit in phase (a) but are allowed to pass through and are only collected in the scan unit. So, the low mobility cutoff of the accumulation unit is adjusted to be higher than the low mobility cutoff of the scan unit in the accumulation phase (a). In other words, in the accumulation phase the accumulation unit only accumulates, from the selected wide range of mobilities, those ions which have the highest mobility in that selected wide range of mobilities up to a low mobility threshold, which is lower than the low mobility limit value of the selected wide range of mobilities. At least at the beginning of phase (a), the scan unit however collects those low mobility ions passing through from the accumulation unit.

The **mass-to-charge ratio** is represented as (m/z), where (m) is the mass of the ion (typically in atomic mass units, amu) and (z) is absolute charge of the ion (which can be positive or negative depending on the measurement mode; typically and especially for proteomics one is in positive mode, having less electrons than protons in the ion if one goes for the elementary particles of the atoms; molecules are usually getting charged by attaching H⁺ so protons). This ratio is dimensionless and crucial for identifying and characterizing ion. The m/z value is calculated by dividing the mass of the ion by its charge. For example, an ion with a mass of 100 amu and a charge of +1 will have an m/z value of 100. If the same ion has a charge of +2, its m/z value will be 50 (If it is the same ion it will be roughly 50.5 because of the additional proton, assumed as the charge carrier: MH+ : (99+1)/1 = 100 Da, MH2^2+: (99+2)/2 = 50.5 Da. Other formulation: If an ion with a mass of 100 amu has a charge of +2 its m/z value will be 50). In a mass spectrometer, ions are separated/analyzed based on their m/z (or based on a property dependent on m/z, e.g. based on a characteristic frequency related to m/z) using electric and/or magnetic fields. This separation allows for the detection and analysis of ions with different masses and charges. The m/z values help in identifying the molecular structure and composition of the sample. By analyzing the mass spectrum, which plots ion intensity against m/z, chemists can determine the presence of specific ions and infer the structure of the molecules. **Mass spectrometry** involves ionizing chemical compounds to generate charged particles (ions). These ions are then separated and detected based on their mass-to-charge ratio (m/z). The resulting data, presented as a mass spectrum, provides valuable information about the molecular structure and composition of the sample. An ionization source ionizes the sample molecules, meaning it converts them into ions by adding or removing charge carriers, typically H⁺ for proteomics applications with electrospray ion sources. The mass analyzer separates the ions based on the mass-to-charge ratio, and ions are detected by the detector. The instrument computer converts the detector signal into a mass spectrum. A mass spectrometer typically operates under vacuum conditions to ensure a collision-free flight path between ionization source and detector.

A **mass spectrum** is a plot that displays the ion signal as a function of the mass-to-charge ratio (m/z) of the ions present in a sample. This spectrum is typically generated using a mass spectrometer and provides valuable information about the molecular composition and structure of the sample. The x-axis of a mass spectrum represents the mass-to-charge ratio, while the y-axis shows the intensity of the ion signal, which correlates with the abundance of each ion. By analyzing the peaks in a mass spectrum, chemists can identify and quantify different molecules within the sample.

**Tandem mass spectrometry (MS/MS),** for which the proposed method is particularly suitable, involves two or more stages of mass spectrometry separated by a fragmentation step. The first mass analyzer selects and isolates ions of a specific m/z (MS1 dimension), the so-called precursor ions, which are then fragmented, for example by collision-induced dissociation (CID). The resulting fragment ions are separated based on their m/z in a second mass analyzer, and detected (MS2 dimension) to form a MS/MS spectrum. Like a regular mass spectrum, an MS/MS spectrum has peaks that represent detected ions. In a typical MS/MS spectrum, peaks representing both the (unfragmented) precursor ion, as well as fragment ions can be found. The fragment ions can be used to identify the chemical structure of the selected and isolated precursor.

**Trapped ion mobility spectroscopy** (TIMS) involves using an electric field to hold ions stationary against a moving gas. This setup allows the drift force to be compensated by the electric field, effectively separating ion packages based on their size-to-charge ratio, commonly referred to as ion mobility or collisional cross section (CCS).

A **mass-mobility heatmap** is a visual representation used in ion mobility spectrometry (IMS) coupled with mass spectrometry (MS) to analyze complex samples. This heatmap plots the mass-to-charge ratio (m/z) of ions on one axis and their ion mobility on the other, creating a two-dimensional map that helps in identifying and characterizing compounds based on their mass and mobility. In practical terms, the mass-mobility heatmap allows to visualize how ions are separated not only by their mass but also by their shape and size, which affects their mobility through a gas. This is particularly useful for distinguishing between isomeric compounds (those with the same mass but different structures) and for identifying isobaric compounds with similar masses but different mobilities. A heatmap shows the intensity values of raw signals, peaks or features (e.g. a fragment of a precursor) in all of the spectra as a function of the spatial coordinates. The x-axis of the heatmap represents the mass dimension of the analysis, the y-axis represents the mobility dimension of the analysis, and the signal intensity is displayed using color coding and/or equipotential lines.

**Parallel Reaction Monitoring** (PRM) is a targeted mass spectrometry technique used for the precise quantification and characterization of specific proteins or peptides in complex samples. In PRM, the process begins with the isolation of target precursor ions typically using a quadrupole mass filter. These isolated ions are then fragmented in a collision cell, and the resulting fragment ions are detected and quantified using a high-resolution mass analyzer, such as an Orbitrap or a time-of-flight (TOF) mass spectrometer.

**Parallel Accumulation SErial Fragmentation** (PASEF), for which the proposed method is particularly suitable, leverages trapped ion mobility spectrometry (TIMS) to accumulate ions in parallel before fragmenting them in series. This process involves holding ions stationary in a tunnel using opposing forces of gas flow and an electric field. The ions find an equilibrium point based on their collisional cross-section, which is a function of their size and shape. Technically their trapping position is based on mobility, which is related to CCS and charge, but ions of very different CCS can have the same mobility and thus position. Once the desired number of ions have been accumulated, they are eluted by gradually lowering the electric field strength, allowing them to enter the mass spectrometer for fragmentation. This method improves the signal-to-noise ratio by concentrating ions of the same mass-to-charge ratio, which enhances the detection of low-abundance species. **Survey scan:** also called MS1 frame, is a scan of a full ion mobility range of interest and a full m/z range of interest without fragmentation, just for the identification of the precursors of interest in the respective LC observation retention time cycle. In the figures given below a survey scan is indicated by a box with "MS1".

The terms "data-dependent" and "data-dependent acquisition" (abbreviated "**DDA**") have their art-established meaning (Hu et al. 2016, doi: 10.12688/f1000research.7042.1.). As such, precursor ions determined and picked in a survey scan in MS1 without fragmentation are collected based on (a) their intensities, whereby normally precursor ions are selected sequentially for fragmentation, and measurement of the associated fragments takes place in the following DDA frames in MS2 in order of decreasing intensity; and/or (b) prior knowledge.

In one individual **DDA frame** within one LC observation retention time cycle, one, or in case of PASEF a group of precursors is selected for measurement within that DDA frame. While scanning or ramping the ion mobility continuously from a minimum value to a maximum value of the upstream ion mobility separator (e.g. 1/K0 = 1.4 to 0.6 Vs/cm2), the precursors of that group are sequentially measured. That measurement of the group of precursors takes place in that, when arriving at an ion mobility value of the respective precursor during the IM scan, the mass filter upstream of fragmentation is chosen to be in a very narrow m/z window (typically a narrow window spanning a range of only 2-3 Da) around the respective m/z value of that precursor to be measured. Said isolating by mass filtering is preferably performed with a quadrupole. Accordingly, preferred mass spectrometers are those equipped with a quadrupole. So, while the ion mobility is continuously ramped from a minimum value to a maximum value, the mass filter jumps to the respective places of where a corresponding precursor is to be measured. Fragmenting takes place downstream of the filter and the MS2 spectra of only the associated fragments of that precursor are measured for each for the precursors of that group in one DDA frame. In a series of such individual DDA frames within one LC observation retention time cycle therefore a corresponding number of groups of precursors are measured. The precursors to be measured in these DDA cycles are scheduled, according to prior art approaches, based on information of interesting precursors determined only in the above-mentioned survey scan (normally based on intensities) of the same or a preceding LC observation time cycle.

Typically, and this applies to DDA frames as well as DIA frames, within one frame several hundred mass scans, typically TOF scans, are carried out.

Within one DDA frame normally 10-15 precursors are individually mass selected and measured, so that for each precursor there are 20-50 mass scans, in particular TOF scans. The term "data-independent acquisition", abbreviated "**DIA**", in conjunction with MS has its art-established meaning (Gillet et al. 2012, doi: 10.1074/mcp.0111.016717). Typically, it refers to the acquisition of MS2 scans of m/z ranges in MS1 having breadths which are much wider and generally comprise multiple analytes/precursors. Number or type of peaks in the MS1 scan are typically of no influence on the choice of the m/z range. All ions within a selected MS1 mass-to-charge range (typically a window spanning a range of 10-200 Da, typically 20-30 Da) are selected for fragmentation. In case of DIA, the precursors are not specifically isolated but isolated together because they are in a certain m/z range that is isolated as a whole. Said isolating is preferably performed with a quadrupole. Accordingly, preferred mass spectrometers are those equipped with a quadrupole.

In one individual **DIA frame** for one given broad MS1 window all precursor ions within that window are selected for fragmentation and all fragments thereof are collectively measured in the MS2 dimension. Also in a DIA frame the ion mobility is scanned, or ramped, and within one ramp in a diaPASEF DIA frame the wide m/z window can jump between 2 or 3 different ranges to cover several parts of a diagonal in MS1. Alternatively, in the so-called MIDIA approach, to capture stripes in a corresponding MS1 diagonal it is possible to successively shift the broad m/z window while ramping the ion mobility from the above-mentioned minimum value to the maximum value. MIDIA is a special case of diagonal-PASEF with overlapping stripes. For diaPASEF and midiaPASEF see Distler et al in https://doi.org/10.1101/2023.01.30.526204.

If a series of DIA frames is carried out within one LC retention time cycle, correspondingly different (preferably non-overlapping) MS1 windows are selected for those DIA frames.

Depending on the aim to be achieved the proportion of ions allowed to pass from the accumulation unit into the scan unit in the accumulation phase (a) can be adapted.

If the aim is to prevent space charge from reducing the ion mobility resolution, typically only a comparably narrow mobility range of the low mobility part of the selected wide range of mobilities is allowed to pass through to the scan unit in the accumulation phase.

In that case typically only 20%, or only 15% or even only 10% of the low mobility part of the selected wide range of mobilities are allowed to pass, which means that the range of (higher) mobilities collected by the accumulation unit in the accumulation phase (a) makes up 80% or 85% or 90% of the full selected wide range of mobilities. So, in that case the range of mobilities accumulated in the accumulation unit starts at the high mobility threshold value of the selected wide range of mobilities and ends at 80% or 85% or 90% of the full selected wide range of mobilities.

In that case the experimental setup is driven by increased resolution, that is reducing space charge effects at the plateau, by relocating about 90% of the ions in the accumulation region.

In this case even a physical plateau in both regions can be implemented by changes to electrodes or resistor profiles such that the analyzer cannot switch operating modes.

The approach further allows varying the transfer of ions between regions based on the number of ions, like a form of ion charge control.

Also, it may allow varying of the scan rate and offset in two ramps as a function of the desired mobility resolution.

If the aim is to increase the capacity of the high mobility species, increasing the practically useful mobility range of the device, typically a larger fraction of the low mobility part of the range of mobilities is allowed to pass through to the scan unit in the accumulation phase. In this case the aim is to extend the mobility range of the standard analyzer which is typically set by the resistor profile and starting mobility.

In that case typically 30%, 40 %, or 50 % or 60 % or 70% of the selected wide range of mobilities are collected in the accumulation unit and all the lower mobility ions are allowed to pass to the scan unit, which means that the range of mobilities passing through to the scan unit in the accumulation phase (a) makes up 70%, 60% or 50 % or 40 % or 30%, respectively, of the full selected wide range of mobilities.

So, in that case the range of mobilities accumulated in the accumulation unit (and eventually detected) in phase (a) starts at the high mobility threshold value of the selected wide range of mobilities and ends at 30%, 40% or 50 % or 60 % or 70% of the full selected wide range of mobilities.

Notably in this case, but also in the above-mentioned case, the analyzer operation can be switched to normal, i.e. to an accumulation phase in which in the accumulation unit the selected wide range of mobilities is collected, and while collecting the scan unit is scanning the mobilities of the ions contained therein. This is making the analyzer capable of performing different analysis types in the same experiment: for example in the same LC or MALDI run, this can be scheduled, for example depending on results obtained from a survey scan taken at the beginning of a series of ion mobility scans within one (LC) observation window. This approach further allows varying the scan rate and offset as a function of the lowest mobility, highest desired mobility, and level of activation as a function of mobility desired for any analysis. This approach transfers ions only as a function of mobility, charge control can be done via accumulation time in the same manner as normal TIMS operation, or Ion Charge Control type implementation (ICC).

Preferably and according to a first embodiment, step (a) is carried out without transferring ions from the accumulation unit into the scan unit over a first part of the analysis while keeping the axial field gradient in the accumulation unit, preferably keeping the axial field gradient in the accumulation unit essentially constant. In that first part of the analysis said scan unit is collecting/keeping ions by way of an axial field gradient increasing from a minimum value at an entrance to a maximum value at the end of the scan unit, said maximum value at the end of the scan unit being larger than said maximum value at the end of the accumulation unit. Said maximum value at the end of the scan unit is successively lowered thereby separating the ions according to mobility at the exit of the scan unit, said maximum value at the end of the scan unit in that first part never getting smaller than the maximum value at the exit of the accumulation unit before starting step (b) in a second part of the analysis. A purge at the end of the ramp can further be implemented.

According to a further embodiment, step (a) is preceded by a step in which said accumulation unit is collecting said ions over a range of mobilities by way of an axial field gradient increasing from a minimum value at an entrance to a maximum value at the end of the accumulation unit, wherein said maximum value at the end of the accumulation unit is set so that the low mobility cut-off of this range of mobilities collected in the accumulation unit (11a) is higher than the low mobility cut-off of said selected wide range of mobilities, without transferring ions from the accumulation unit into the scan unit, preferably keeping the axial field gradient in the accumulation unit essentially constant. In that preceding step said scan unit is scanning (high mobility, previously accumulated) ions by way of an axial field gradient increasing from a minimum value at an entrance to a maximum value at the end of the scan unit, said maximum value at the end of the scan unit being lower than said maximum value at the end of the accumulation unit, and wherein said maximum value at the end of the scan unit is successively lowered to a minimum value thereby separating the ions according to mobility at the exit of the scan unit.

Steps (a) and (b) can also be carried out in parallel, preferably over the full scan of the selected wide range of mobilities.

In step (b) the value of the axial field in the zone between the exit of the accumulation unit and the entrance of the scan unit can be kept constant.

Or in step (b) the value of the axial field in the zone between the exit of the accumulation unit and the entrance of the scan unit can be smaller than any of the maximum and minimum field values and in parallel can be successively lowered with said maximum value at the end of the accumulation unit and said maximum value at the end of the scan unit. In particular for the case where the aim is to increase the capacity of the high mobility species, so where a smaller part of the mobility range is accumulated in phase (a), this can be used as a dynamic mobility dependent activation set up. The approach also allows the possibility of mobility dependent duty cycle, for example while operating in MSMS mode, without the requirement for an upstream accumulation device.

Or in step (b) the value of the axial field in the zone between the exit of the accumulation unit and the entrance of the scan unit is kept at the value of said maximum value at the end of the accumulation unit and is in parallel successively lowered with said maximum value at the end of the accumulation unit and said maximum value at the end of the scan unit. Or it is successively increased relative to said maximum value at the end of the accumulation unit in phase (b). In particular for the case where the aim is to increase the capacity of the high mobility species, so where a smaller part of the mobility range is accumulated in phase (a), this can be used for introducing a pseudo-plateau between the two regions by manipulating the applied voltages, this increases the mobility resolution of the first ramp, but not to the point of the second ramp.

During the whole of step (b) preferably in parallel said maximum value at the end of the accumulation unit and said maximum value at the end of the scan unit are in parallel successively lowered and thereby separating the ions according to mobility at the exit of the scan unit.

Preferably during the whole of step (b) said maximum value at the end of the scan unit is larger than said maximum value at the end of the accumulation unit except for a final phase, where said maximum value at the end of the accumulation unit is essentially the same as the minimum value at the entrance of the accumulation unit, and essentially the same as the minimum value at the entrance of the scan unit, and where the maximum value at the exit of the scan unit is lowered for scanning the highest mobility range of the ions.

A partial second fill may be made during the TIMS scan that is trapped on the first or second ramp, lower mobility species will simply fly through the TIMS device and may be filtered later in software as their m/z mobility correlation is incorrect, or the ions may be directly rejected by a selection quadrupole or other mass filter during isolation of target eluting species for MSMS analysis .

During a second stage fill a lower deflector voltage may be used to reduce the intensity of low mobility species or reduce activation of target high mobility species.

The duty cycle of the highest mobility can be varied up to 100%.

The lowest mobility is typically limited to the initial fill injection time into the TIMS device. An arbitrary number of ion injection events can be made over the range of mobilities. According to a particularly preferred embodiment, the axial field gradient in the accumulation unit and/or the scan unit is essentially a linear field gradient or is optimized for the mid mobility range as given above, preferably in the range 0.6-1.4 1/K0. Field gradients can be non-linear and have been evaluated as from x^0.5 to x^2. Field gradients can even be unchanging if the mass flow creates a gradient like in a funnel shaped system.

Likewise, the scan rate of the potential in time can be non-linear

The trapped ion mobility separator is preferably one in in which the transferred ions are radially confined by an RF field and pushed by a gas flow against a rising edge of an axial electric DC field barrier in each of the units such that the transferred ions are spatially separated along the rising edge according to ion mobility and wherein the height of the electric DC field barrier is chosen such as to retain only ions having an ion mobility higher than an upper threshold value.

The separated ions are preferably analyzed by a downstream mass analyzer,
and/or the separated ions are fragmented to produce fragment ions that are analyzed by a downstream mass analyzer,
and/or the separated ions pass a band-pass mass filter that produces filtered ions that are then fragmented, and resulting fragment ions are analyzed by a downstream mass analyzer.

Said ions may originate from a continuous or non-continuous source, including a liquid chromatography unit or a non-continuous source such as MALDI.

In MALDI TIMS experiments the proposed technique is particularly useful as MALDI is a destructive technique, leading to a limited mobility range being able to be studied effectively, as currently available techniques only enable the analysis of a wide mobility range across multiple fill events, which is not problematic with a continuous source wherein the species to be studies will be observable for several seconds compared to MALDI..

An upstream device is preferably used to bias, but not restrict, or to restrict, the transmission of ions to a specific mobility range.

The proposed method can be used for the analysis of a complex sample, including samples in proteomics and metabolomics.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: schematically shows the principle as proposed in the prior art document US 2012/0273673 for sequential field barrier filtering in TIMS-like devices;
- Fig. 2: shows the device and operation of a trapped ion mobility spectrometry (TIMS) analyzer. Top: Scheme of the TIMS device. Center: The profile of the electric field strength along the z axis. The size of the dots on the electric field ramp reflects their space charge. The scan releases the ion bunches in sequence of their mobilities. Bottom: The ion current of ion pulses separated in time according to mobility, representing an ion mobility spectrum.

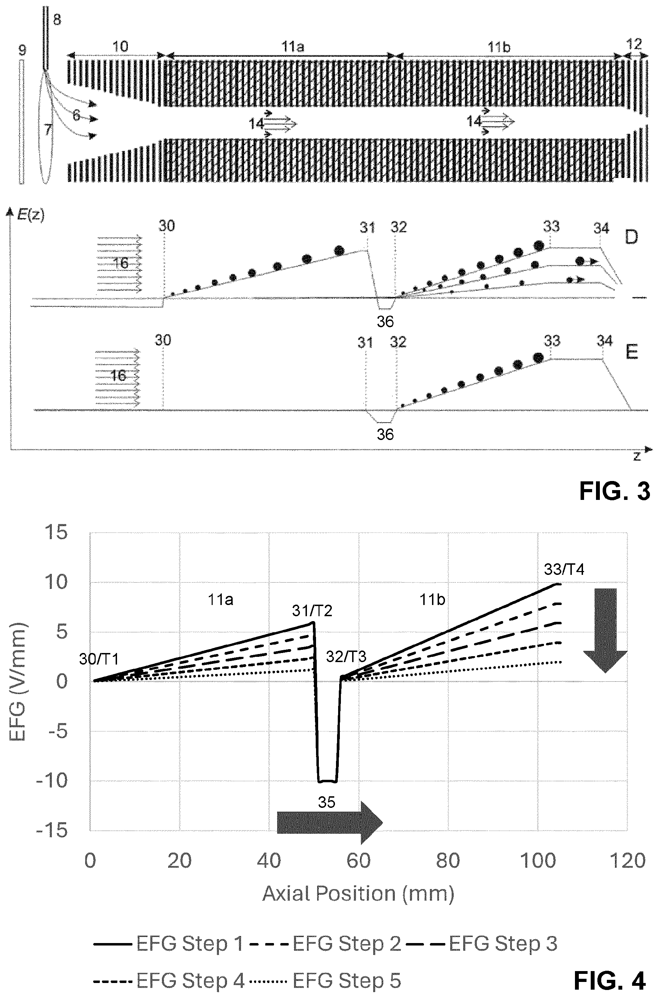

- Fig. 3: shows the device and operation of a trapped ion mobility spectrometry (TIMS) analyzer with parallel accumulation and separation. Top: Scheme of the TIMS device depicting "accumulation" (11a) and "analyzer" (11b) regions. Bottom: Plots representing the DC electric field gradient and ion positions during the accumulation and analysis steps. In the upper row a first group of ions are eluted from the analyzer region 11b by lowering the electric field gradient between points 32 and 34 while a second group of ions is simultaneously accumulated in the accumulation region on the electric field gradient between points 30 and 31. Note the size of the dots represents the collision cross section (mobility and ccs if all ions are of the same charge) of the ions. In the lower row, the field in the analyzer region 11b is returned to its full strength after having eluted the first group of ions and the second group of ions is transferred from the accumulation region 11a to the analyzer region 11b by dropping the DC field strength in the accumulation region 11a to zero.
- Fig. 4: shows a schematic representation of a TIMS ramping for constant activation potential between the two regions;
- Fig. 5: shows a schematic representation of a TIMS ramping for decreasing delta 6 values;
- Fig. 6: shows a schematic representation of a TIMS ramping for constant delta 6 values with partial parallel accumulation;
- Fig. 7: shows a schematic representation of the first phase of a TIMS ramping for constant delta 6 values with partial parallel accumulation, illustrating how high mobility ions are not stored in the scan unit initially;
- Fig. 8: shows a schematic representation of a TIMS ramping for delta 6 values set to form a pseudo plateau between accumulation and scan unit;
- Fig. 9: shows a comparison of split scan (b) to standard parallel accumulation scans (a) of various mobility ranges;
- Fig. 10: in a) shows measurements for variable mobility scan widths using the standard parallel accumulation approach and in b) using the proposed approach.

### DESCRIPTION OF PREFERRED EMBODIMENTS

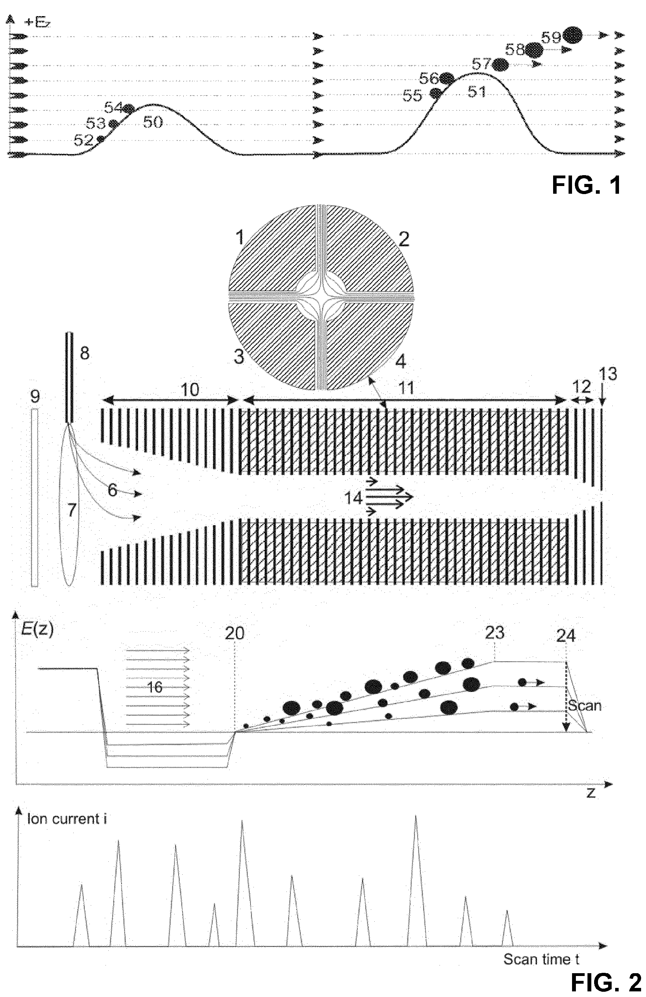

**Fig. 1** depicts a prior art, mobility-based filtering method according to Park et al. in US 2012/0273673. According to this document two mobility devices are provided. Ions to be filtered, entrained in a gas, are introduced at an entrance of the first mobility device. "...gas drives entrained ions against a first field barrier 50, keeping back all ions with mobilities µ[>/=]µ₁. This case is schematically illustrated in this Fig. 1 showing the disposition of ions 52 to 59 with different mobilities, indicated by different sizes of the dots representing the ions with their cross sections. The gas drives the ions 55 to 59, that have passed the first barrier 50 against a second field barrier 51, keeping back the ions 55 and 56 with mobilities µ>/=µ₂ and thus keeping back and collecting all ions of a mobility in the range Δµ between µ₁ and µ₂ with µ₁>µ₂. The ions 57 to 59 with µ<µ₂ pass the second barrier and disappear. To collect the ions 55 and 56, there has to be an ion storage device between the filters, e.g. by the provision of radial forces to keep the ions within the collection volume between the two barriers, such like a multipole field with its centripetally acting pseudopotential. The simplest way to generate the storage volume may be an enclosure of both filters in an RF multipole device, for instance, in an RF quadrupole system."

**Fig. 2** outlines schematically a TIMS analyzer which can be used in the present context as referred to in US 7,838,826 B1 and its operation. Entrained by a gas 7, ions 6 from an electrospray ion source (not shown) are introduced via capillary 8 into a first chamber of a vacuum system. A repeller plate 9 drives the ions 6 into an entrance funnel 10 of the mobility analyzer. Ion funnels 10, 12 usually are built as a stack of apertured diaphragms the openings of which taper to smaller diameters thus forming an inner volume in the shape of a funnel. Two phases of an RF voltage are applied alternately to the diaphragms to build up a pseudopotential which keeps the ions away from the funnel walls. The ions are driven to and through the narrow end of the first funnel 10 into the TIMS tube 11 by an axial gas flow 14 and optionally by an additional DC potential gradient along the diaphragms.

The axial gas flow 14 through the TIMS tube 11 is laminar and shows, in radial direction, a substantially parabolic velocity distribution. Nitrogen may serve as a preferred gas. The vacuum conditions around the TIMS tube 11 are chosen such that the maximum gas velocity amounts to about 100 to 150 meters per second, at a pressure of a few hectopascals. This velocity is only achieved near the axis. Further off axis, the velocity is considerably lower, as schematically indicated by the arrows 14 in Fig. 2.

The first funnel 10 guides the ions into the TIMS tube 11 forming a tunnel with internal RF quadrupole field in radial direction. The TIMS tunnel 11 comprises a stack of thin electrodes with central holes which form a circular tube arranged around the z-axis of the device. The thin electrodes are separated by insulating material closing the gaps between the electrodes around the tube. The electrodes of the TIMS tube 11 are segmented into quadrants 1, 2, 3, 4, to allow for the generation of a radially confining quadrupolar electric RF field inside. The quadrants 1, 2, 3, 4 of the tube electrodes are shown at the top of **Fig. 2** with equipotential lines of the quadrupolar RF field inside the tube at a given time. It should be mentioned here that the design of a quadrupole tunnel does not necessarily consist of metal electrode sheets; there are a lot of different possibilities including stacked PCB boards or even a rolled PCB board with printed electrodes.

Inside the TIMS tunnel 11, the ions are blown or rather pushed by the gas flow 14 against an axial electric DC field barrier. In the center part of **Fig. 2****,** the profile of the axial electric DC field barrier is shown for three phases of a scan. Between z locations 20 and 23, the electric DC field increases linearly, generated by a quadratically (can also be other functions, linear, square root etc) increasing electric potential. Between z locations 23 and 24, the electric DC field remains constant, forming a plateau of the electric DC field barrier, generated by a linear increase of the electrical potential. In a simple device, for instance, the complete field profile can be generated by a two voltages, applied to the diaphragm electrode at location 24, and divided by precision resistors along the diaphragm electrodes of the TIMS tube 11. The resistors between location 20 and 23 increase linearly, the resistors between 23 and 24 have equal resistance. In more complex devices, non-linear field electric field profiles may be generated, even adjustable DC field profiles, e.g. by digital-to-analog converters (DAC).

The conventional operation of the TIMS analyzer as described in US 7,838,826 B1 starts with an "ion accumulation phase", accumulating ions on the uppermost electric DC field ramp of the diagram. A voltage difference on the order of 300 V produces the electric DC field barrier. The ions are pushed by the gas flow, symbolically indicated by the arrows 16, against the electric DC field barrier and are stopped there because they cannot surmount the electric DC field barrier. It should be noted that the arrows 16 represent the maximum gas velocity of the parabolic gas velocity distribution 14 within the tube. The ions are accumulated on the rising edge of the electric DC field between locations 20 and 23, where ions of low mobility (e.g. heavy ions with large collision cross section) gather in the high field near the upper end of the field ramp, so close to 23, whereas ions of high mobility gather in the low field near the foot of the ramp, so close to 20. The size of the dots in this case represents the abundance of the ions of distinct ion mobility, indicating the strength of the space charge. In the following subsequent "scan phase", the supply voltage/amplitude for the electric DC field barrier is steadily decreased, and ions of increasing mobility can escape towards an ion detector, particularly to a mass analyzer operating as ion detector. In the bottom of Fig. 2, the resulting ion current of the released ion species is shown. The measured total ion current curve i= f(t) presents directly an ion mobility spectrum from low ion mobilities (high collision cross section, but note, both mass and charge are factors in CCS, not just mobility, a +1 ion at the same mobility as a +2 ion both of the same mass would have a factor of 2 difference in CCS) to high ion mobilities (low collision cross section).

The ion mobility resolution R_{mob} depends on the scan speed. The lower the scan speed, the higher the resolution. As already mentioned, ion mobilities of R_{mob} = 400 have been achieved with the comparably small TIMS devices, using slow scans. Since the ions generated in the ion source are lost during the scan phases, the duty cycle (or the utilization rate of the ions) depends on the ratio of the accumulation time tₐ to the scan time tₛ.

**Fig. 3** shows an embodiment of a mobility spectrometer which is used in the present context and which combines accumulation and subsequent separation as e.g. described in US 9,683,964 B2. The *temporally* sequential accumulation and scan phases of the approach given in Fig. 1 in this case of Fig. 2 is replaced by *spatially* sequential accumulation and scan phases, allowing for parallel accumulation and scanning. The TIMS device in this case comprises an elongated tunnel 11, divided into an accumulation unit 11a and a scan unit 11b, and two or four voltage supply units (not shown) for the two tunnel units 11a, 11b, contacting the diaphragms at locations 31 and 34. Chains of resistors between the diaphragms in both tunnel units produce two axial electric DC field profiles, shown in the bottom part of the figure.

The operation of the TIMS device according to **Fig. 3** comprises two phases: In the accumulation and scan phase D given in the upper line, ions from an ion source (not shown) are accumulated on the rising edge of the electric field profile in the accumulation unit 11a while, at the same time, previously accumulated ions in the scan unit 11b are scanned by decreasing the voltage supplied to location 33/34 of the scan unit 11b, thereby releasing ions with higher and higher mobilities through the exit funnel 13 towards the ion detector. In the transfer phase E given in the lower line, first the voltage of the scan unit 11b is restored, and then the voltage of the accumulation unit 11a is switched off to let the accumulated ions from the accumulation unit 11a be driven by the gas flow onto the rising edge of the electric field profile of the scan unit 11b. The transfer is completed after only one millisecond, and the accumulation and scan phase may start again by switching on the voltage at location 31.

At the interface of the accumulation unit 11a and the scan unit 11b there is a typically attractive or accelerating potential, also termed delta 6 potential. To conserve and measure analytical species, the delta 6 potential can be critical. It is used for the transfer of the ions from the accumulation unit to the separation unit. Since this delta 6 potential is applied over a short distance , the resulting electric field may become quite strong. The delta 6 potential can be tuned to determine an optimal value, where maximum mobility separation can be achieved at the same time keeping the analytical species intact. In case of commercial TIMS devices, the delta 6 potential parameter is linked to the mobility range set on the device and on the pressure inside TIMS device (the value the user sets is related to these, but depending on the application one may tune the activation potential differently).

**Fig. 4** schematically illustrates the proposed method for a first embodiment of the present invention. The figure is a representation of the axial E field as a function of the axial position in a trapped ion mobility device with parallel accumulation possibilities, so having an accumulation unit 11a and scan unit 11b.

In this case, the aim is to increase the range of mobilities in particular with a view to high mobility ions, so of the selected wide range of mobilities a rather large fraction of the low mobility ions is allowed to pass from the accumulation unit 11a to the scan unit 11b.

Step 1 indicates phase (a) of the above-mentioned method: the accumulation unit 11a only accumulates ions, the mobility of which is high and which are held back by the axial E field value at the entrance of the accumulation unit 11a (axial position 0 mm, reference numeral 30/T1), which also represents the high mobility threshold of the selected wide range of mobilities of the device in this setting (ions with higher mobility than the scan range if entering will also be trapped). The axial E field value increases in a linear gradient to a maximum value of the accumulation unit at position 31/T2 at about an axial position of 50 mm. The potential then drops to a value indicated with reference 35, at the interface between the accumulation unit and the scan unit, and in this embodiment the value of potential at this position 35 is constant over the whole process. It then increases again at the position of about 55 mm to essentially the same value as at the entrance of the accumulation unit 11a, to the potential 32/T3 at the entrance of the scan unit 11b. From there the axial field increases in a linear gradient to a maximum value 33/T4 at the end of the ramp of the scan unit 11b. The axial field at this position 33/T4 in this case is significantly higher than the maximum value 31/T2 at the end of the accumulation unit. Translated into the range of ion mobilities measured using this scheme, in this case the mobilities of the ions collected in the accumulation unit 11a between 30/T1 and 31/T2 make up about 60% of the ion mobilities which are within the selected wide range of mobilities, so which are collected by a ramp defined by 32/T3 going up to 33/T4, so in the scan unit 11b. The high mobility ions with low M/z are trapped in the accumulation unit 11 a. The low mobility ions on the other hand are only trapped in the scan unit 11b.

In this embodiment there is no scanning of the scan unit 11b before at the same time also lowering the ramp of the accumulation unit. This means that in the following steps 2-5, i.e. phase (b) as described above, the two ramps 30/T1-31/T2 and 32/T3-33/T4 are synchronously lowered in parallel by reducing, in a synchronized way, the maximum values at positions 31/T2 and 33/T4. The barrier of the scan unit is successively reduced as indicated by the arrow illustrated on the right-hand side. As illustrated by the horizontal arrow, small ions move into the scan unit 11b as the scan progresses since they are released by the successively lowered barrier at position 31/T2.

As indicated in this figure, this reduction can be a linear reduction by the same percentages at both maximum positions, and the ramps can be linear as illustrated. However, it should be noted that the ramps can be non-linear and also the successive reduction of the maximum values at positions 31/T2 and 33/T4 can be chosen to be a nonlinear successive reduction.

The final step of phase (b), not illustrated specifically in the figure, will be one where the values of 31/T2 and 33/T4 are at the same as at positions 30/T1 and 32/T3, and after that phase (a) is started again, as typically this scheduling is repeated/cycled as often as desired/necessary.

The useful mobility range of a TIMS device may be extended using this technique in near arbitrary fashion to higher mobilities, by employing two trapping regions, each with an electric field profile set by the physical resistor profile implemented in the device, the storage volume for a given mobility may be tuned with applied voltages rather than by introducing hardware changes to the devicelnstead, a portion of the mobility (0.2-0.8 1/K0 for example) out of the full 0.2-1.8 1/K0 scan range, is stored initially in what is traditionally the "accumulation" region (T1 to T2), this range is ramped out as the "analyzer" or scan unit (T3 to T4) scan progresses.

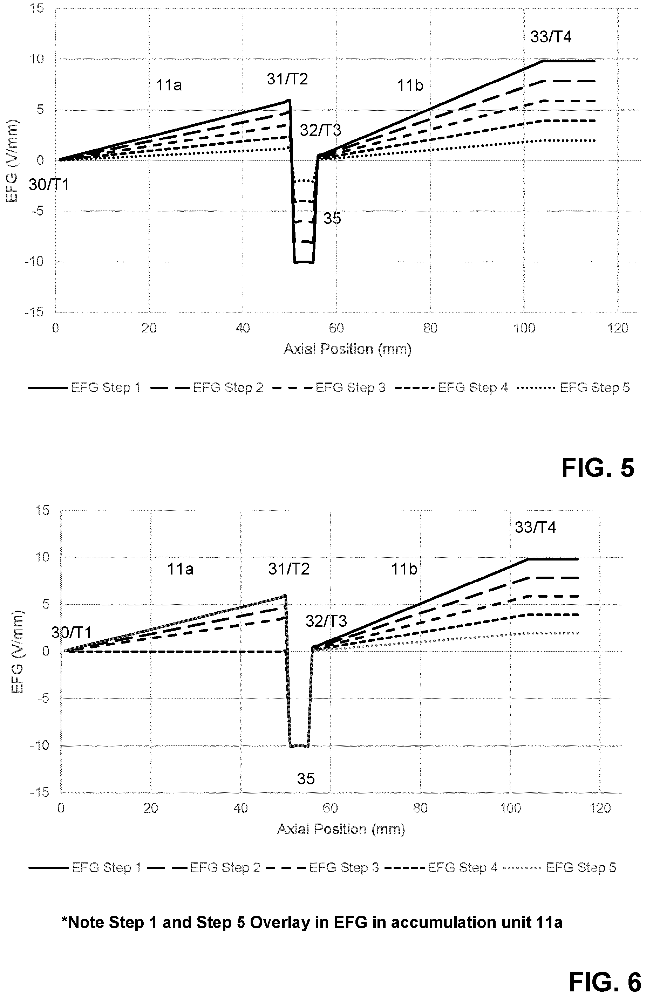

The applied voltage difference between T1/T2 and T3/T4 may be scanned at a constant offset, a converging rate, diverging rate, or other arbitrary function, e.g. in a partial parallel accumulation type experiment as described in Fig. 6 below.

These scan function descriptions also apply to the resulting electric field gradient at the exit, or other position in the two sections of the device, additionally these descriptions apply to the mobility trapped and/or eluted by the applied combination of fields and gas flows. Electric field profiles are shown in Fig. 4 at a constant "delta 6" value 35 traditionally used for activation or declustering.

**Fig. 5** schematically illustrates the proposed method for a second embodiment of the present invention. The figure is again a representation of the axial E field as a function of the axial position in a trapped ion mobility device with parallel accumulation possibilities, so having an accumulation unit 11a and scan unit 11b.

The general conditions are the same as the ones illustrated in Fig. 4, however in this case the value of the electric field at the interface between the accumulation unit and the scan unit is successively decreasing as the ions get higher in mobility in the process. This approach enables mobility dependent activation prior to mobility elution across this region by scanning down the difference between T2/T3 over time, thereby reducing the activation experienced by the higher mobility ions.

**Fig. 6** schematically illustrates the proposed method for a third embodiment of the present invention. The figure is again a representation of the axial E field as a function of the axial position in a trapped ion mobility device with parallel accumulation possibilities, so having an accumulation unit 11a and scan unit 11b.

The general conditions are the same as the ones illustrated in Fig. 4, however in this case there is a phase (a) as illustrated in Fig. 4, and then followed by essentially the same steps 2-3. However then, while the ramp of the scan unit 11b is still present, in step 4 the ramp in the accumulation unit 11 a is completely lowered to allow all the ions stored in the accumulation unit 11a previously to pass through to the scan unit 11b. In the next step 5 the ramp in the accumulation unit 11a is increased again to the starting ramp, and while now in the accumulation unit 11a the high mobility ions are accumulated, the scan unit 11b continues to scan the high mobility ions by successively lowering the ramp. This is a step preceding step (a) as described above. Only once the scanning in the scan unit 11b is over and the value 33 has reached its minimum value, in step 5 the ramp in the scan unit 11b is increased to the starting value again, while the ramp in the accumulation unit 11a is not changed compared with step 5, leading to the position of step 1. Only then the process continues again by successive lowering of the ramps in the accumulation unit 11a and the scan unit 11b to the end of step 3. The process is cycled accordingly.

All mobilities are transferred during step 4 and in step 5, T1/T2 resets to apply a trapping field covering the full accumulation mobility range. If this value were set to the maximum value of 33/T4 in the scan unit, this would lead to poor performance in the high mobility range due to the limited geometric volume for these ions to be trapped in.

The idea behind this partial parallel accumulation is generally due to ion chemistry/energetics one can hold more of the low mobility ions, this lets one begin collecting those ions during the scan, and once finished switch to SplitScan transferring the accumulated low mobility (in particular) ions to the analyzer, and continuing to fill the accumulation region with high mobility species. This may induce some difficulties in quantitation as different mobilities have different accumulation times and storage volumes, but will ultimately increase signal for the low(er) mobility species.

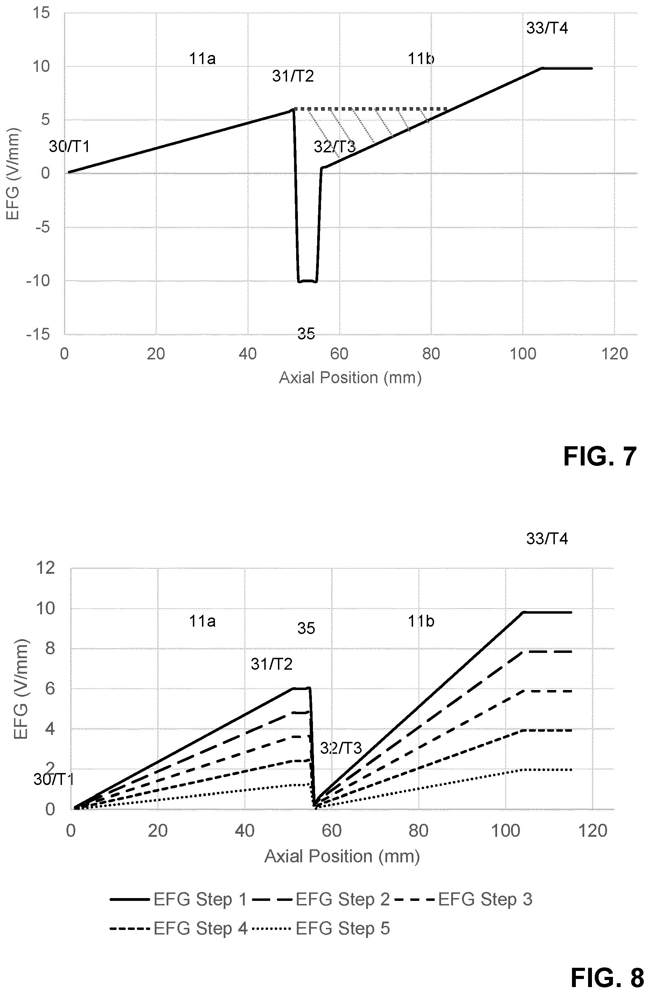

**Fig. 7** schematically illustrates the situation for step 1 in the above examples: high mobility ions are not stored in the analyzer (mobilities above the dashed line), and only the low mobility fraction, illustrated by the circle in the scan unit 11b, is accumulated in 11a and not allowed to pass to 11b.

**Fig. 8** schematically illustrates the proposed method for a third embodiment of the present invention. The figure is again a representation of the axial E field as a function of the axial position in a trapped ion mobility device with parallel accumulation possibilities, so having an accumulation unit 11a and scan unit 11b.

In this case the potential 35 at the interface between the accumulation unit and the scan unit is used to form a Delta 6 pseudo-plateau.

This keeps T1 from becoming too negative. T1-T2 is the potential needed to block ions to store them. Raising T2 allows the same difference with T1 but requires less voltage for T1. The difference in T2 and T3 is delta 6, so higher values are needed for broader mobility range. Delta 6 can also be used to decluster, desolvate, or otherwise activate ions so that a cleaner spectrum can be acquired, or can be used to create fragments so that a mobility spectrum of fragments is possible.

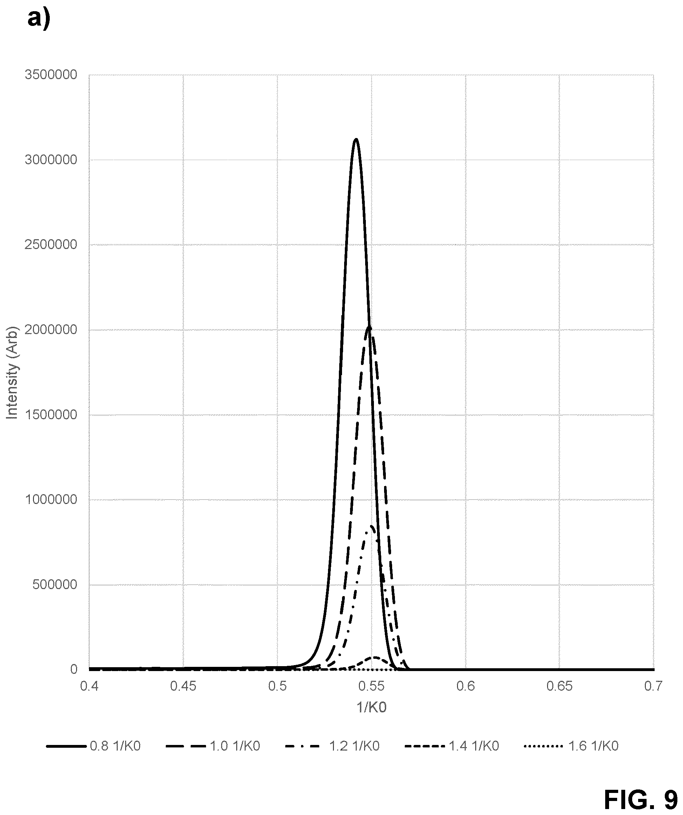

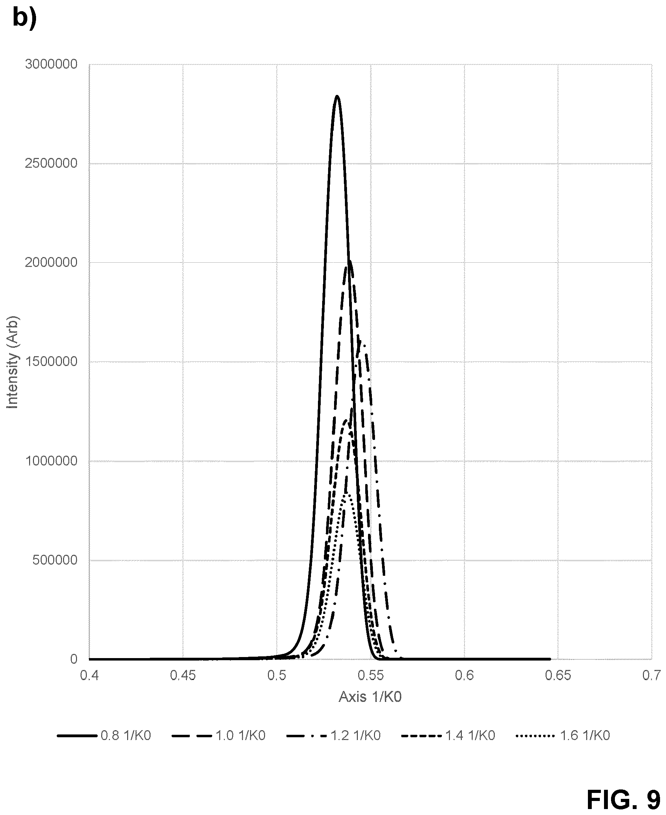

**Fig. 9** illustrates a comparison of conventional parallel accumulation (a) with the proposed split scan method (b) adapted to increase the capacity of the high mobility species, so increasing the practically useful mobility range of the device, in which a larger fraction of the low mobility part of the range of mobilities is allowed to pass through to the scan unit in the accumulation phase (20 ms fill, 850 kHz, 475 Vpp). It compares this split scan (b) to standard parallel accumulation (a) and scanning scans of various mobility ranges. Each peak is the 118 extracted ion mobilogramfrom different mobility scan ranges.

If standard scan is used, narrow K range, focused on small molecule (0.2-0.95), this gives high 118 but no higher masses.

If standard scan is used, broad K range (0.2-1.55), this shows all species, but 118 is suppressed.

Split scan in b) shows the entire K range and has a higher charge capacity, but operates at reduced duty cycle.

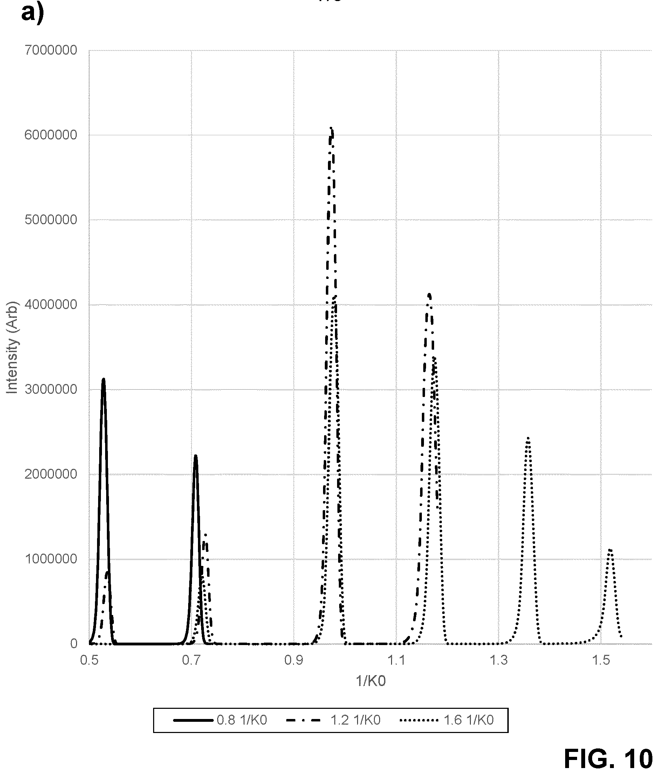

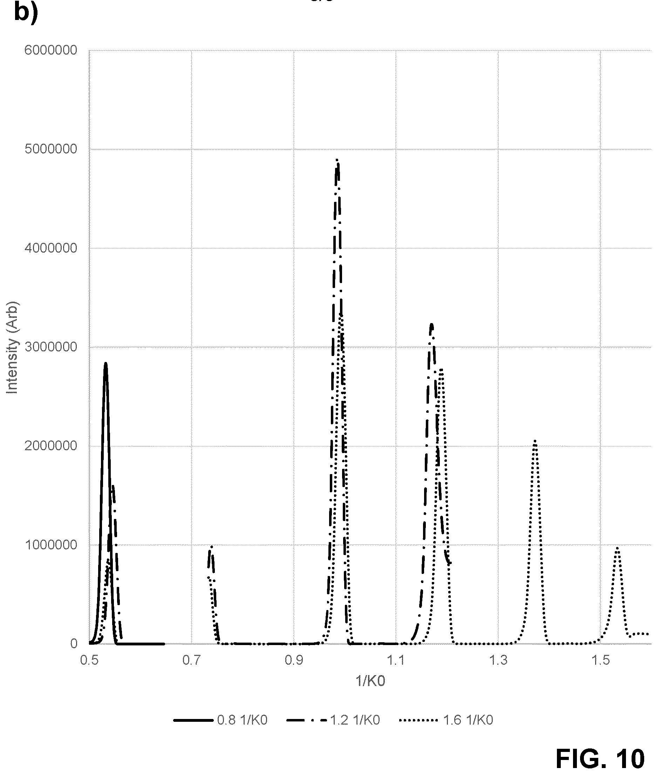

**Fig. 10** schematically illustrates a comparison of the standard parallel accumulation approach (Fig. 10a) with the proposed split scan method (Fig. 10b) adapted to increase the capacity of the high mobility species, so increasing the practically useful mobility range of the device, in which a larger fraction of the low mobility part of the range of mobilities is allowed to pass through to the scan unit in the accumulation phase (20 ms fill, 850 kHz, 475 Vpp). As can be seen from Fig. 10b, the full mobility range, is exploited at 20% duty cycle, there is no separate parallel accumulation and higher charge capacity (because entire length of cartridge is used as the analyzer).

### LIST OF REFERENCE SIGNS

- 1-4: quadrants of the TIMS tube
- 6: ions
- 7: gas
- 8: capillary
- 9: repeller plate
- 10: entrance funnel
- 11: TIMS tube
- 11a: accumulation unit of 11
- 11b: scan unit of 11
- 13: exit funnel
- 14: axial gas flow
- 16: maximum gas flow velocity
- 20: z location, beginning of rising edge
- 23: z location, end of rising edge
- 24: z location
- 30: potential/EFG at the entrance of the accumulation unit, T1
- 31: diaphragm location, potential/EFG at the end of the accumulation unit, T2
- 32: potential/EFG at the entrance of the scan unit, T3
- 33: potential/EFG at the end of the ramp of the scan unit, T4
- 34: diaphragm location
- 35: potential at the interface between the accumulation unit and the scan unit, delta 6 potential

- 50: first field barrier
- 51: second field barrier
- 52-59: ions with decreasing mobility

- EFG: axial field gradient
- tₐ: accumulation time
- tₛ: scan time
- D: accumulation and scan phase
- E: transfer phase

## Claims

1. A method for analyzing ions of a selected wide range of mobilities using a trapped ion mobility separator comprising an accumulation unit (11a) and a scan unit (11b),
comprising the steps of:
(a) collecting said ions in said accumulation unit (11a) over a range of mobilities by way of an axial field gradient increasing from a minimum value (30), preferably at an entrance, to a maximum value (31), preferably at the end of the accumulation unit (11a), or by way of a variable axial gas velocity increasing from a minimum value to a maximum value,
wherein said maximum value (31), preferably at the end of the accumulation unit, is set so that the low mobility cut-off of this range of mobilities collected in the accumulation unit (11a) is higher than the low mobility cut-off of said selected wide range of mobilities;
and collecting ions in said scan unit (11b) over said full selected wide range of mobilities by way an axial field gradient increasing from a minimum value (32) at an entrance to a maximum value (33) at the end of the scan unit (11b),
(b) transferring ions from the accumulation unit (11a) into the scan unit (11b), said scan unit (11b) collecting ions by way of an axial field gradient increasing from a minimum value (32) at an entrance to a maximum value (33) at the end of the scan unit (11b), said maximum value (33) at the end of the scan unit (11b) being larger than said maximum value (31), preferably at the end of the accumulation unit,
wherein in at least one phase of that transfer simultaneously said maximum value (31), preferably at the end of the accumulation unit (11a) and said maximum value (33) at the end of the scan unit (11b) are successively lowered, thereby separating the ions according to mobility at the exit of the scan unit (11b).

2. Method according to claim 1, wherein step (a) is carried out without transferring ions from the accumulation unit (11a) into the scan unit (11b) over a first part of the analysis, preferably keeping the axial field gradient in the accumulation unit essentially constant,
wherein in that first part of the analysis said scan unit (11b) is collecting/keeping ions by way of an axial field gradient increasing from a minimum value (32) at an entrance to a maximum value (33) at the end of the scan unit (11b), said maximum value (33) at the end of the scan unit (11b) being larger than said maximum value (31) at the end of the accumulation unit,
and wherein said maximum value (33) at the end of the scan unit (11b) is successively lowered thereby separating the ions according to mobility at the exit of the scan unit (11b), said maximum value (33) at the end of the scan unit (11b) in that first part never getting smaller than the maximum value (30) at the exit of the accumulation unit (11a) before starting step (b) in a second part of the analysis.

3. Method according to claim 1 or 2, wherein step (a) is preceded by a step in which said accumulation unit (11a) is collecting said ions over a range of mobilities by way of an axial field gradient increasing from a minimum value (30) at an entrance to a maximum value (31) at the end of the accumulation unit (11a), wherein said maximum value (31) at the end of the accumulation unit is set so that the low mobility cut-off of this range of mobilities collected in the accumulation unit (11a) is higher than the low mobility cut-off of said selected wide range of mobilities, without transferring ions from the accumulation unit (11a) into the scan unit (11b), preferably keeping the axial field gradient in the accumulation unit essentially constant,
wherein in that preceding step said scan unit (11b) is scanning ions by way of an axial field gradient increasing from a minimum value (32) at an entrance to a maximum value (33) at the end of the scan unit (11b), said maximum value (33) at the end of the scan unit (11b) being lower than said maximum value (31) at the end of the accumulation unit,
and wherein said maximum value (33) at the end of the scan unit (11b) is successively lowered to a minimum value thereby separating the ions according to mobility at the exit of the scan unit (11b).

4. Method according to and of the preceding claims, wherein steps (a) and (b) are carried out in parallel, preferably over the full scan of the selected wide range of mobilities.

5. Method according to any of the preceding claims, wherein in step (b) the value (35) of the axial field in the zone between the exit of the accumulation unit (11a) and the entrance of the scan unit (11b) is kept constant in steps (a) and (b),
and/or wherein in step (b) the value (35) of the axial field in the zone between the exit of the accumulation unit (11a) and the entrance of the scan unit (11b) is smaller than any of the maximum (31,33) and minimum (30,32) field values and is either in parallel successively lowered with said maximum value (31) at the end of the accumulation unit (11a) and said maximum value (33) at the end of the scan unit (11b) or is successively increased relative to said maximum value (31) at the end of the accumulation unit (11a) in phase (b).

6. Method according to any of the preceding claims, wherein in step (b) the value (35) of the axial field in the zone between the exit of the accumulation unit (11a) and the entrance of the scan unit (11b) is kept at the value of said maximum value (31) at the end of the accumulation unit (11a) and is in parallel successively lowered with said maximum value (31) at the end of the accumulation unit (11a) and said maximum value (33) at the end of the scan unit (11b).

7. Method according to any of the preceding claims, wherein during the whole of step (b) in parallel said maximum value (31) at the end of the accumulation unit (11a) and said maximum value (33) at the end of the scan unit (11b) are in parallel successively lowered and thereby separating the ions according to mobility at the exit of the scan unit (11b).

8. Method according to any of the preceding claims, wherein during the whole of step (b) said maximum value (33) at the end of the scan unit (11b) is larger than said maximum value (31) at the end of the accumulation unit (11a) except for a final phase, where said maximum value (31) at the end of the accumulation unit (11a) is essentially the same as the minimum value (30) at the entrance of the accumulation unit (11a), and essentially the same as the minimum value (32) at the entrance of the scan unit (11b), and where the maximum value (33) at the exit of the scan unit (11b) is lowered for scanning the highest mobility range of the ions.

9. Method according to any of the preceding claims, wherein the axial field gradient in the accumulation unit (11a) and/or the scan unit (11b) is essentially a linear field gradient or a non-linear field gradient.

10. Method according to any of the preceding claims, wherein the trapped ion mobility separator is one in in which the transferred ions are radially confined by an RF field and pushed by a gas flow against a rising edge of an axial electric DC field barrier in each of the units (11a, 11B) such that the transferred ions are spatially separated along the rising edge according to ion mobility and wherein the height of the electric DC field barrier is chosen such as to retain only ions having an ion mobility higher than an upper threshold value (17).

11. The method according to any of the preceding claims, wherein the separated ions are analyzed by a downstream mass analyzer,
and/or wherein the separated ions are fragmented to produce fragment ions that are analyzed by a downstream mass analyzer,
and/or wherein the separated ions pass a band-pass mass filter that produces filtered ions that are then fragmented, and resulting fragment ions are analyzed by a downstream mass analyzer.

12. The method according to any of the preceding claims, further comprising repeating steps (a) to (b).

13. The method according to any of the preceding claims, wherein said ions originate from a continuous or non-continuous source, including a liquid chromatography unit or a non-continuous source such as MALDI.

14. The method according to any of the preceding claims, wherein an upstream (mobility or filter) device is used to bias, but not restrict, or to restrict, the transmission of ions to a specific mobility range.

15. Use of the method of any of the preceding claims for the analysis of a complex sample, including samples in proteomics and metabolomics.
